# EUROPEAN PATENT SPECIFICATION

(11) **EP 1 872 685 B1**
(45) Date of publication and mention of the grant of the patent: **07.10.2009**
(21) Application number: 06725824.4
(22) Date of filing: 17.03.2006
(51) Int. Cl.: A47B 96/14, F16S 3/04

(54) **SHELF-FIXING SYSTEM**
REGALBEFESTIGUNGSSYSTEM
SYSTEME DE FIXATION POUR ETAGERES

(30) Priority: 23.03.2005 ES 200500695
(43) Date of publication of application: 02.01.2008
(73) Proprietor: Esmena S.L., 33211 Gijon (ES)
(72) Inventor: MENENDEZ RUIZ, Manuel Jesus, E-33211 Gijon (ES)
(74) Representative: Carvajal y Urquijo, Isabel
(86) International application number: PCT/ES2006/000135
(87) International publication number: WO 2006/100328

(56) References cited:
- EP-A- 0 262 110
- WO-A-20/04085910
- DE-A1- 19 849 359
- DE-U1- 8 522 091
- DE-U1- 29 601 819
- ES-A1- 2 216 701
- ES-U- 1 025 610
- ES-U- 1 041 767
- ES-U- 1 054 148
- ES-Y- 262 666
- ES-Y- 269 792
- FR-A3- 2 568 668

## Description

### FIELD OF THE INVENTION

The present invention relates to a fastening system for shelves suitable for being used in sets of shelves forming rack-type structures for the storage and handling of palletized and non-palletized goods. It is specifically suitable in high density facilities in which the load unit has certain characteristics such that the support surface does not have to be complete.

It is also suitable in those cases in which for fire safety reasons, the surface of the shelves must allow the easy passage of fire attenuating or extinguishing agents, and generally in all those cases in which it is desirable or necessary to have systems ensuring that the panels of the shelves will not move out of place during normal operations of storing and removing the load unit in its space in the set of shelves.

### BACKGROUND OF THE INVENTION

Shelves are normally used in storage centers for depositing the different goods, and the standard configuration of such shelves is always similar, having a series of normally vertical uprights which are fixed to the ground between which a pair of beams are arranged in their longitudinal dimension which are responsible for connecting pairs of uprights, the shelves themselves being supported between them.

A large number of systems for fastening the shelves to the mentioned beams are currently known and used, said beams normally being metallic profiles having a different nature which have a series of holes or grooves made in their flanges and the panels forming the shelves normally have grooved extensions opposite to the holes of the beams used as means of joining the two using any type of known auxiliary mechanical joining means such as for example screws and nuts or rivets.

The use of the mentioned auxiliary joining means between the beams and the panels forming the shelves makes the assembly of the shelves more complicated and the installation costs quite significant. On the other hand, many times the screws or rivets forming the mentioned auxiliary joining means work under high shear stresses produced by the weight itself of the items thereby causing their fatigue failure and therefore the disconnection between the panels forming the shelves and the beams, and the goods deposited on the shelves consequently fall to the ground. Another fastening system for shelves is described in DE 85 22091 U1.

A need to provide a fastening system for shelves has therefore been detected which has crenellated beams the configuration of which allows arranging the panels forming the shelves in a simple manner, which achieves limiting both the longitudinal and transverse movement of each shelf with respect to the corresponding pair of beams in which it is supported.

This objective is obtained by means of the invention as it is defined in claim 1, preferred embodiments of the invention being defined in the dependent claims.

### DESCRIPTION OF THE INVENTION

The present invention relates to a fastening system for shelves comprising a plurality of beams and a plurality of shelves which are supported at their ends on a pair of said beams, which beams comprise two U-shaped profiles, a first profile and a second profile, each of which respectively has a first horizontal section and a second horizontal section and a vertical section, both profiles being located in the horizontal position such that the openings of both are opposite one another and their respective first horizontal sections and second horizontal sections remain integrally joined to one another and which shelves have an upper panel, two side walls and two end walls all of them perpendicular to the upper panel.

The system is characterized in that the first and second sections of the first and second profile alternately overlap, the first horizontal section of the first profile being longer than the second horizontal section of the second profile, partially projecting with respect to the vertical section of the second profile and in that said first horizontal section of the first profile has at its free end at least one notch configured so as to allow the entrance of an end portion of each of the side walls of the shelf such that the longitudinal movement of each shelf with respect to the corresponding pair of beams in which it is supported is limited.

A very simple assembly of the shelves in the beams is thus obtained since it is only necessary to adjust the position of the panel of the shelf in the space comprised between the corresponding pair of beams with the aid of the configuration of said beams which, by having the mentioned notches, allow the rest and at the same time the retention of the mentioned panels with very little stress, resulting in a very strong connection between the mentioned panels and the pair of beams. Furthermore, as a result of the configuration of the beams and of the panels, the use of auxiliary joining means such as screws or the like is prevented, and it additionally achieves in a simple manner that the shelves are not moved with respect to the beams when the goods are handled and loaded.

For the purpose of making the system more versatile and obtaining an easier assembly, the side walls of the shelves have at their end portions respective recesses running along the first horizontal section of the first profile of the beam to the free end of the mentioned notches. In addition, the end walls of the shelves extend beyond the limit defined by each pair of beams externally overlapping them and defining with the aid of the mentioned recesses respective seat areas of the shelf on the beams such that the transverse movement of each shelf with respect to the corresponding pair of beams in which it is supported is limited.

A blocking of the transverse movement of the shelf with respect to the beams is thus added to the blocking of the relative longitudinal movement between them, since the portion of the horizontal section of the first profile is clamped on one side by the corresponding end wall of the shelf and on the other side by the corresponding side wall of the shelf surpassing the area where the notch of the beam is located, said side wall partially penetrating the mentioned notch which acts as a stop in the possible transverse movement of the shelf with respect to the beam.

### BRIEF DESCRIPTION OF THE DRAWINGS

A series of drawings which aid in better understanding the invention and which are expressly related to the embodiments of said invention is very briefly described below, presented as illustrative and non-limiting examples thereof.
Figure 1 shows a perspective view of the fastening system for shelves object of the present invention.
Figure 2 shows a side view of the two profiles separately which form the beams forming the fastening system for shelves object of the present invention.
Figure 3 shows a side view of the two profiles forming the beams forming the fastening system for shelves object of the present invention once joined together.
Figure 4 shows a detailed perspective view of the connection between the shelves and the beams forming the fastening system for shelves object of the present invention.

### DESCRIPTION OF A PREFERRED EMBODIMENT OF THE INVENTION

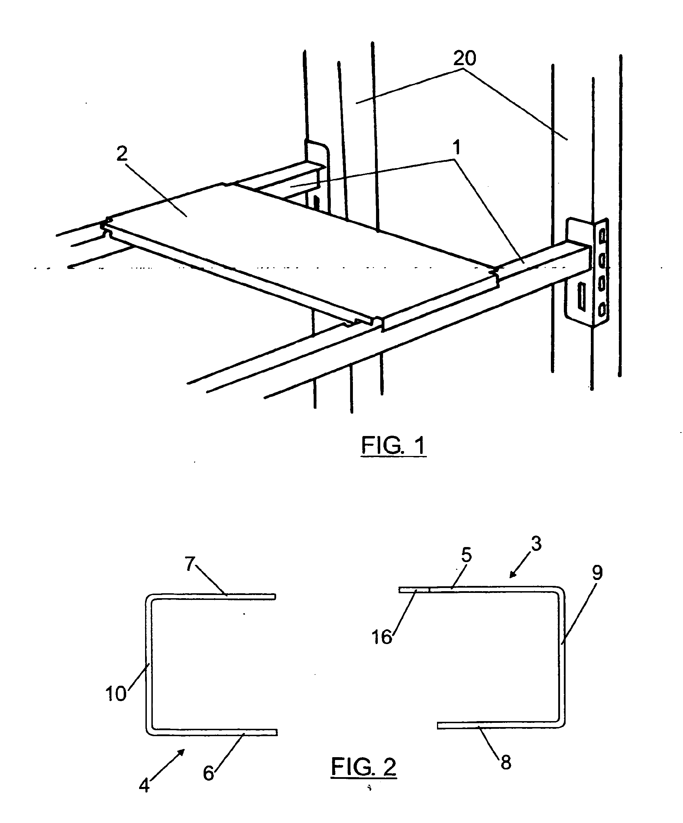

As can be seen in Figure 1, the fastening system for shelves object of the present invention comprises a plurality of beams 1 which are supported at their ends on uprights 20 and a plurality of shelves 2 which in turn are supported at their ends on pairs of the mentioned beams 1.

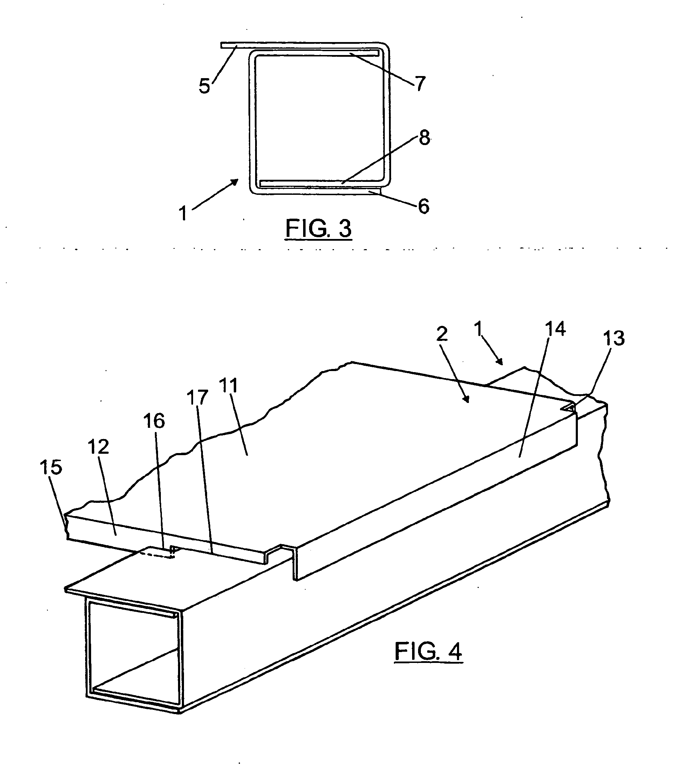

As can be seen in Figures 2 and 3, the beams 1 are formed by two U-shaped profiles, a first profile 3 and a second profile 4, each of which in turn has a first horizontal section 5, a second horizontal section 6 and a vertical section 9 for the case of the first profile 3, and a first horizontal section 7, a second horizontal section 8 and a vertical section 10 for the case of the second profile 4. Both profiles are located in the horizontal position, the corresponding openings defined by the mentioned U-shape being opposite to one another such that the corresponding first 5, 7 and second 6, 8 horizontal sections of the first and second profile 3, 4 respectively are integrally joined together, respectively, defining a tubular profile of the beam 1. More specifically, the mentioned sections 5, 7, 6, 8 alternately overlap, i.e. the first section 5 of the first profile 3 is located under the first section 7 of the second profile 4, and for its part the second section 6 of the first profile 3 is located under the second section 8 of the second profile 4; this configuration can be seen in Figure 3.

In addition, each of the shelves is formed by an upper panel 11, two vertical walls 12, 13 and two end walls 14, 15, said vertical and end walls being perpendicular to the mentioned upper panel 11.

As a feature that distinguishes this invention from the prior art, the first horizontal section 5 of the first profile 3 is longer than the second horizontal section 7 of the second profile 4, partially projecting with respect to the vertical section 10 of the second profile 4, a portion of said first horizontal section 5 being cantilevered with respect to the rest of the beam 1, and at least one notch 16 being defined on the free end of said portion, the mission of such notch being to allow the entrance of an end portion of each of the side walls 12, 13 of the shelf 2 with respect to the corresponding pair of beams 1 on which it is supported. According to the described configuration, the mentioned notches 16 of the beams 1 are actually useful as a seat area for supporting the shelves 2. It is thus achieved that the longitudinal movement (in the direction of the greater dimension of the beam) of each shelf 2 with respect to the corresponding pair of beams 1 on which it is supported is completely limited.

The system is complemented as a result of the particular configuration of the shelves 2, and more specifically of its side walls 12, 13, which have at their end portions respective recesses 17 which extend along the first horizontal section 5 of the first profile 3 to the free end of the notches 16, and the end walls 14, 15 of the shelves 2 further extend beyond the limit defined by each pair of beams 1, as can be seen in Figure 4, being attached externally thereto. Both features of the shelves 2 define respective seat areas of the shelf 2 on each of the beams 1 on which it is supported, which allows limiting the transverse movement (in a direction perpendicular to the greater dimension of the beams) of each shelf 2 with respect to the mentioned beams 1.

## Claims

1. A fastening system for shelves comprising a plurality of beams (1) and a plurality of shelves (2) which are supported at their ends on a pair of said beams (1), which beams (1) comprise two U-shaped profiles, a first profile (3) and a second profile (4), each of which respectively has a first horizontal section (5,7) and a second horizontal section (6,8) and a vertical section (9, 10), both profiles (3,4) being located in the horizontal position such that the openings of both are opposite one another and their respective first horizontal sections (5,7) and second horizontal sections (6,8) remain integrally joined together and which shelves (2) have an upper panel (11), two side walls (12,13) and two end walls (14,15), all of them perpendicular to the upper panel (11), **characterized in that** the first and second sections of the first and second profile alternately overlap, the first horizontal section (5) of the first profile (3) being longer than the second horizontal section (7) of the second profile (4), partially projection with respect to the vertical section (10) of the second profile (4) and **in that** said first horizontal section (5) of the first profile (3) has at its free end at least one notch (16) configured so as to allow the entrance of an end portion of each of the side walls (12,13) of the shelf (2) such that the longitudinal movement of each shelf (2) with respect to the corresponding pair of beams (1) on which it is supported is limited.

2. A fastening system for shelves according to claim 1, **characterized in that** the side walls (12,13) of the shelves (2) have at their end portions respective recesses (17) running along the first horizontal section (5) of the first profile (3) of the beam (1) to the free end of the mentioned notches (16) and **in that** the end walls (14,15) of the shelves (2) extend beyond the limit defined by each pair of beams (1) externally overlapping them and defining with the aid of the mentioned recesses (17) respective seat areas of the shelf (2) on the beams (1) such that the transverse movement of each shelf (2) with respect to the corresponding pair of beams (1) on which it is supported is limited.

## Patentansprüche

1. Befestigungssystem für Regalfachböden, umfassend mehrere Träger (1) und mehrere Regalfachböden (2), die an deren Enden auf einem Paar der Träger (1) getragen werden, wobei die Träger (1) zwei U-förmige Profile umfassen, ein erstes Profil (3) und ein zweites Profil (4), von denen jedes jeweils einen ersten horizontalen Abschnitt (5, 7) und einen zweiten horizontalen Abschnitt (6, 8) sowie einen vertikalen Abschnitt (9, 10) aufweist, wobei beide Profile (3, 4) in der horizontalen Position angeordnet sind, derart, dass die Öffnungen von beiden einander gegenüberliegen und deren entsprechende erste horizontale Abschnitte (5, 7) und zweite horizontale Abschnitte (6, 8) integrierend zusammengefügt bleiben, und wobei die Regalfachböden (2) eine obere Platte (11), zwei Seitenwände (12, 13) und zwei Endwände (14, 15) aufweisen, welche alle rechtwinkelig zu der oberen Platte (11) verlaufen, **dadurch gekennzeichnet, dass** die ersten und die zweiten Abschnitte des ersten und des zweiten Profils einander wechselweise überlappen, wobei der erste horizontale Abschnitt (5) des ersten Profils (3) länger als der zweite horizontale Abschnitt (7) des zweiten Profils (4) ist und teilweise in Bezug auf den vertikalen Abschnitt (10) des zweiten Profils (4) vorragt, und **dadurch**, dass der erste horizontale Abschnitt (5) des ersten Profils (3) an seinem freien Ende mindestens eine Einkerbung (16) aufweist, die derart konfiguriert ist, dass sie das Eintreten eines Endabschnitts von jeder der Seitenwände (12, 13) des Regalfachbodens (2) ermöglicht, derart, dass die Längsbewegung jedes Regalfachbodens (2) in Bezug auf das entsprechende Paar von Trägern (1), auf denen dieser getragen wird, begrenzt wird.

2. Befestigungssystem für Regalfachböden nach Anspruch 1, **dadurch gekennzeichnet, dass** die Seitenwände (12, 13) der Regalfachböden (2) an ihren Endabschnitten entsprechende Ausnehmungen (17) aufweisen, welche den ersten horizontalen Abschnitt (5) des ersten Profils (3) des Trägers (1) entlang zu dem freien Ende der genannten Einkerbungen (16) verlaufen, und **dadurch**, dass sich die Endwände (14, 15) der Regalfachböden (2) über die Grenzen hinaus erstrecken, die durch jedes Paar von Trägern (1) definiert werden, wobei sie diese außen überlappen und mit Hilfe der genannten Ausnehmungen (17) entsprechende Auflageflächen des Regalfachbodens (2) auf den Trägern (1) definieren, derart, dass die Querbewegung jedes Regalfachbodens (2) in Bezug auf das entsprechende Paar von Trägern (1), auf denen dieser getragen wird, begrenzt wird.

## Revendications

1. Système de fixation pour des étagères comprenant une pluralité de poutres (1) et une pluralité d'étagères (2) qui sont supportées au niveau de leurs extrémités sur une paire desdites poutres (1), lesquelles poutres (1) comprennent deux profils en forme de U, un premier profil (3) et un second profil (4), dont chacun a respectivement une première section horizontale (5, 7) et une seconde section horizontale (6, 8) et une section verticale (9, 10), les deux profils (3, 4) étant positionnés dans la position horizontale de sorte que les ouvertures des deux sont opposées entre elles et leurs premières sections horizontales (5, 7) et secondes sections horizontales (6, 8) respectives restent solidairement assemblées et lesquelles étagères (2) ont un panneau supérieur (11), deux parois latérales (12, 13) et deux parois d'extrémité (14, 15), toutes étant perpendiculaires au panneau supérieur (11), **caractérisé en ce que** les premières et secondes sections des premier et second profils se chevauchent en alternance, la première section horizontale (5) du premier profil (3) étant plus longue que la seconde section horizontale (7) du second profil (4), faisant partiellement saillie par rapport à la section verticale (10) du second profil (4) et **en ce que** ladite première section horizontale (5) du premier profil (3) a, au niveau de son extrémité libre, au moins une encoche (16) configurée pour permettre l'entrée d'une partie d'extrémité de chacune des parois latérales (12, 13) de l'étagère (2), de sorte que le mouvement longitudinal de chaque étagère (2) par rapport à la paire correspondante de poutres (1) sur laquelle elle est supportée, est limité.

2. Système de fixation pour des étagères selon la revendication 1, **caractérisé en ce que** les parois latérales (12, 13) des étagères (2) ont, au niveau de leurs parties d'extrémité, des évidements (17) respectifs s'étendant le long de la première section horizontale (5) du premier profil (3) de la poutre (1) vers l'extrémité libre des encoches (16) mentionnées et **en ce que** les parois d'extrémité (14, 15) des étagères (2) s'étendent au-delà de la limite définie par chaque paire de poutres (1) les chevauchant extérieurement et définissant à l'aide des évidements (17) mentionnés respectifs des zones de siège de l'étagère (2) sur les poutres (1) de sorte que le mouvement transversal de chaque étagère (2) par rapport à la paire correspondante de poutres (1) sur laquelle elle est supportée, est limité.
